# EUROPEAN PATENT SPECIFICATION

(11) **EP 2 629 355 B1**
(45) Date of publication and mention of the grant of the patent: **13.02.2019**
(21) Application number: 11832664.4
(22) Date of filing: 05.04.2011
(51) Int. Cl.: H01M 10/0525, H01M 2/16, C08J 5/18, B01D 71/10, H01G 9/02, B01D 67/00, B01D 69/10, H01M 2/14

(54) **POROUS SEPARATOR USING CELLULOSE NANOFIBERS, AND METHOD FOR PREPARING SAME**
PORÖSER SEPARATOR MIT ZELLULOSE-NANOFASERN UND HERSTELLUNGSVERFAHREN DAFÜR
SÉPARATEUR POREUX UTILISANT DES NANOFIBRES DE CELLULOSE ET SON PROCÉDÉ DE PRÉPARATION

(30) Priority: 11.10.2010 KR 20100098886
(43) Date of publication of application: 21.08.2013
(73) Proprietor: The Republic Of Korea (Forestry Administration Forestry Research Institute), Seoul 130-712 (KR)
(72) Inventor: LEE, Ji Hyeon, Seoul 120-132 (KR); CHUN, Sang Jin, Namyangju-si Gyeonggi-do 472-785 (KR); JUNG, Cheol Su, Seoul 143-200 (KR); LEE, Sun Young, Seoul 122-957 (KR); DOH, Geum Hyun, Seoul 139-760 (KR)
(74) Representative: Schiweck Weinzierl Koch Patentanwälte Partnerschaft mbB
(86) International application number: PCT/KR2011/002340
(87) International publication number: WO 2012/050277

(56) References cited:
- EP-A1- 1 483 039
- WO-A1-2007/088974
- KR-B1- 100 470 314
- KR-B1- 100 890 594
- US-A1- 2003 180 622
- US-A1- 2006 286 446
- US-A1- 2009 241 496

## Description

### CROSS-REFERENCE TO RELATED APPLICATION

This application claims priority of Korean Patent Application No. 2010-0098886, filed October 11, 2010.

### BACKGROUND

### 1. Field of the Invention

The present invention relates to a separator, and, more particularly, to a porous separator using cellulose nanofibrils, which is applicable to a separator for lithium-ion secondary batteries, and a method of preparing the same.

### 2. Discussion of Related Art

A separator serves to prevent contact between polar plates present between the positive and negative poles in a battery and also plays a very important role in improving performance of a battery as an electronic part that plays an important role in enhancing stability of the battery.

In particular, a separator has increasingly depended on safety of a battery with an increase in energy density. There has been a demand for developing an affordable, highly functional separator that can implement the safety so that it can be applied to lithium-ion batteries requiring high capacity/high-power characteristics.
In recent years, a polyolefin-based separator such as a polyethylene film, a polypropylene film, or a polyethylene-polypropylene composite film has been widely used as the separator.
However, the polyolefin-based separator has problems in that it may melt at a temperature approximately 130 °C due to its innate characteristics even when it has a high molecular weight, and is strongly resistant to shrinkage even at a temperature of less than 130 °C due to characteristics of a porous elongated film.
Therefore, when such a polyolefin-based separator is used for a lithium-ion secondary battery, a sudden increase in temperature in a battery accelerates shrinkage of the separator itself, which leads to a high risk of causing an internal short circuit between positive and negative poles.
Therefore, the battery itself may fire or explode due to an increase in battery temperature caused by the internal short circuit or may serve as a new ignition source, which leads to a high risk of causing serious problems to safety of the battery. In this context, document EP1483039 discloses a solution for improving the mechanical strength of a porous separator. For this purpose, the fabrication method of said separator comprises the step of mixing cellulose fibrils with a polymeric binder, wherein the binder enhances the mechanical strength of the separator.

### SUMMARY OF THE INVENTION

The present invention is directed to providing a porous separator using cellulose nanofibrils, which has excellent physical properties such as thermal stability, dimensional stability, and an impregnation property with respect to an electrolyte, and a method of preparing the same. The present invention provides a method of preparing a porous separator using cellulose nanofibrils. Here, the method includes preparing a sheet using a solution including cellulose nanofibrils and a resin for forming pores (i.e., a pore-forming resin) (operation 1) and removing the pore-forming resin included in the sheet to form micropores (operation 2).

In this case, the cellulose nanofibrils have a diameter of 10 to 1,000 nm, or 10 to 200 nm.

Also, the cellulose nanofibrils are selected from the group consisting of cellulose nanofibrils separated from a nanosized woody material, algae cellulose nanofibrils, and bacterial cellulose nanofibrils obtained by incubating a strain.

In addition, the pore-forming resin are selected from the group consisting of polyethylene glycol, polypropylene alcohol, polypropylene, and hydroxy cellulose.

Another aspect of the present invention provides a porous separator using cellulose nanofibrils prepared by the method as described above.

Still another aspect of the present invention provides a lithium secondary battery including the porous separator using cellulose nanofibrils prepared by the method as described above.

### BRIEF DESCRIPTION OF THE DRAWINGS

The above and other objects, features and advantages of the present invention will become more apparent to those of ordinary skill in the art by describing in detail exemplary embodiments thereof with reference to the attached drawings, in which:
FIG. 1 is an image of a porous separator using cellulose nanofibrils prepared according to one exemplary embodiment of the present invention and an olefin-based separator taken before a thermal stability test;
FIG. 2 is an image of a porous separator using cellulose nanofibrils prepared according to one exemplary embodiment of the present invention and an olefin-based separator taken after the thermal stability test;
FIG. 3 is a diagram showing the tensile strength of a sheet using cellulose nanofibrils prepared according to one exemplary embodiment of the present invention according to the number of cycles;
FIG. 4 is a scanning electron microscope (SEM) image of the sheet using cellulose nanofibrils prepared according to one exemplary embodiment of the present invention before removal of a pore-forming resin from the sheet;
FIG. 5 is an SEM image of the sheet using cellulose nanofibrils prepared according to one exemplary embodiment of the present invention after removal of the pore-forming resin from the sheet;
FIG. 6 is an infrared spectrometer (IRS) graph of a porous sheet using cellulose nanofibrils prepared according to one exemplary embodiment of the present invention, and cellulose;
FIG. 7 is a graph illustrating the porosities of the porous separator using cellulose nanofibrils according to the content of the pore-forming resin in a phase separation method according to one exemplary embodiment of the present invention;
FIG. 8 is an image of the porous separator using cellulose nanofibrils prepared according to one exemplary embodiment of the present invention, which has undergone an impregnation property test;
FIG. 9 is a graph illustrating the uptake rate of the porous separator using cellulose nanofibrils according to the content of the pore-forming resin in the phase separation method according to one exemplary embodiment of the present invention;
FIG. 10 is a graph illustrating the ionic conductivity of the porous separator using cellulose nanofibrils according to the content of the pore-forming resin in the phase separation method according to one exemplary embodiment of the present invention;
FIG. 11 is a graph illustrating the initial charge/discharge capacity of the porous separator using cellulose nanofibrils according to the content of the pore-forming resin in the phase separation method according to one exemplary embodiment of the present invention; and
FIG. 12 is a graph illustrating the charge/discharge cycle of the porous separator using cellulose nanofibrils according to the content of the pore-forming resin in the phase separation method according to one exemplary embodiment of the present invention.

### DETAILED DESCRIPTION OF EXEMPLARY EMBODIMENTS

Hereinafter, exemplary embodiments of the present invention will be described in detail. However, the present invention is not limited to the embodiments disclosed below but can be implemented in various forms. The following embodiments are described in order to enable those of ordinary skill in the art to embody and practice the present invention.

A method of preparing a porous separator using cellulose nanofibrils according to the present invention includes preparing a sheet using a solution including cellulose nanofibrils and a pore-forming resin (operation 1) and removing the pore-forming resin included in the sheet to form micropores (operation 2).

First, operation 1 is to prepare a sheet using a solution including cellulose nanofibrils and a pore-forming resin. Here, the cellulose nanofibrils have a diameter of 10 to 1,000 nm.

When the diameter of the cellulose nanofibrils is less than 10 nm, it is difficult to form cellulose fibrils, whereas, when the diameter of the cellulose nanofibrils exceeds 1,000 nm, a sheet has an uneven surface, which makes it difficult to form a lithium layer upon application to a lithium secondary battery.

Also, when the diameter of the cellulose nanofibrils exceeds 200 nm, pores may not be formed uniformly. Accordingly, the diameter of the cellulose nanofibrils is more preferably in a range of 10 nm to 200 nm.

The cellulose nanofibrils is at least one selected from a group consisting of cellulose nanofibrils separated from a nanosized woody material, algae cellulose nanofibrils, and bacterial cellulose nanofibrils obtained by incubating a strain.

The kind of the pore-forming resin may be all used without limitation as long as it is a resin including a solvent in which the pore-forming resin may be uniformly mixed with the cellulose nanofibrils and be selectively dissolved without dissolving the cellulose nanofibrils during preparation of the solution.

A water-soluble polymer may be selected as such a pore-forming resin. Preferably, at least one selected from the group consisting of polyethylene glycol, polyvinyl alcohol, polyvinyl propylene, and hydroxy cellulose may be selected.

A solvent in which the cellulose nanofibrils and the pore-forming resin may be readily dispersed may be used as the solvent. For example, water (H₂O) may be selected as the solvent.

When a mixing ratio of the pore-forming resin is less than 8:2 with respect to the cellulose nanofibrils in operation 1, a sufficient amount of pores may not be formed in the separator. On the other hand, when the mixing ratio of the pore-forming resin exceeds 5:5, the pore-forming resin may interfere with bonding between the cellulose nanofibrils, which makes it impossible to prepare a sheet.

The solution in which the cellulose nanofibrils and the pore-forming resin are dispersed may be passed through a high-pressure homogenizer to prepare a cellulose nanofibril suspension, and the suspension may be decompressed to prepare a sheet.

In this case, according to one exemplary embodiment of the present invention, the cellulose nanofibrils are prepared into nonwoven fabrics using a method of preparing a sheet, for example, a conventional method of making paper. However, all kinds of methods of preparing a sheet may be used to prepare a separator for lithium secondary batteries.

A thickness of the sheet may be in a range of approximately 20 to 80 µm. When the thickness of the sheet exceeds 80 µm, weight and charge/discharge efficiency of a battery may be highly affected.

The cellulose nanofibrils have an advantage in that, when polyethylene glycol is used during preparation of a sheet, -OH groups present in functional groups may be reduced due to an increase in hydrogen bonds, and thus a reaction between Li ions and -OH groups in the cellulose nanofibrils does not take place when the cellulose nanofibrils are used for a separator for lithium secondary batteries, which leads to an increase in stability.

Also, when polyethylene glycol is used as the pore-forming resin, the pore-forming resin may have a -OH group at the end thereof. Therefore, the pore-forming resin may be uniformly mixed with the cellulose nanofibrils.

Operation 2 is to remove the pore-forming resin included in the sheet to form micropores. Here, operation 2 is performed using a phase separation method.

More particularly, when polyethylene glycol is used as the pore-forming resin, the polyethylene glycol may be removed from the sheet by immersing the sheet in a container containing dichloromethane.

In this case, when the polyethylene glycol is used as the pore-forming resin as described above, the pore-forming resin may be uniformly mixed with the cellulose nanofibrils since the pore-forming resin has a -OH group at the end thereof. As a result, pores may be formed uniformly when the polyethylene glycol is removed from the sheet.

Also, the present invention is directed to providing a nanocellulose separator for lithium secondary batteries prepared by the method as described above.

Moreover, the present invention is directed to providing a lithium secondary battery including the porous separator using cellulose nanofibrils prepared by the method as described above.

A structure of the lithium secondary battery according to the present invention is not particularly limited, and batteries having an angular, cylindrical, pouch- and coin-type structure may be exemplified.

Also, an electrode active material may be used for positive and negative poles. Among electrode active materials, a positive-pole active material may be used without particular limitation as long as it may serve to absorb and release lithium ions.

### Comparative Example 1

An olefin-based separator was purchased and used herein. Pores were formed in such an olefin-based separator by causing a crack inducer present in an extruded film to form fine cracks on the interface of the extruded film as the extruded film is elongated at a low temperature. Here, a crystal lamella was used as the crack inducer.

Porous separators of Comparative Examples 2 and3 and Examples 1 to 3 were prepared as listed in the following Table 1.

**Table 1**

| | Cellulose nanofibrils:Polyethylene glycol | Thickness (µm) |
|---|---|---|
| Comparative Example 2 | 100:0 | 20 to 70 |
| Comparative Example 3 | 87:13 | 20 to 70 |
| Example 1 | 76:24 | 20 to 70 |
| Example 2 | 60:40 | 20 to 70 |
| Example 3 | 50:50 | 20 to 70 |

### <Analysis>

### 1. Measurement of thermal resistance of separator according to the present invention

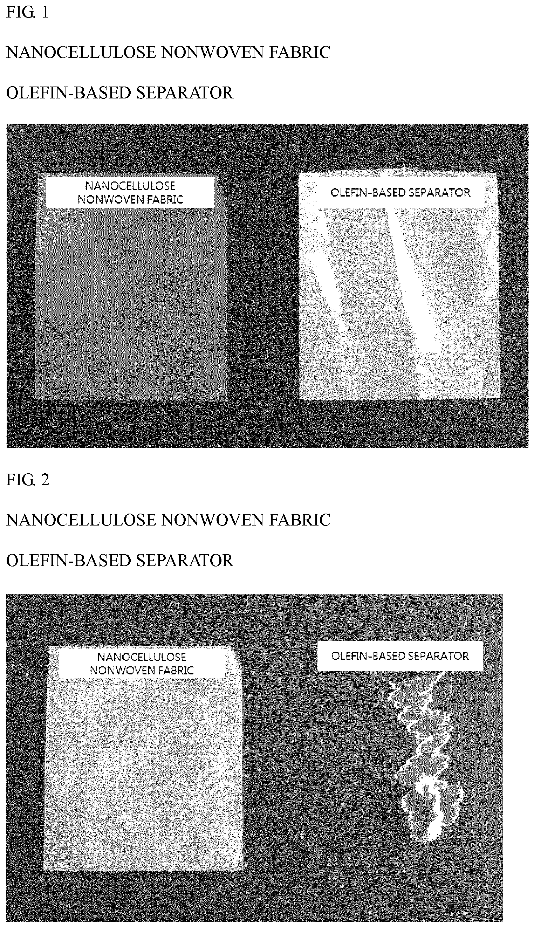

FIGS. 1 and 2 are images of an olefin-based separator of Comparative Example 1 and a porous separator of Example 1 taken before the separators were exposed at 200 °C and after the separators were exposed at 200 °C for 30 minutes.

Since the olefin-based separator of Comparative Example 1 had a low melting point, the frame of the olefin-based separator is completely lost when the olefin-based separator is exposed at a temperature of 200 °C. Therefore, when the olefin-based separator of Comparative Example 1 is used as the separator for lithium-ion secondary batteries, the reliability may not be ensured.

Meanwhile, since thermal stability of the porous separator of Example 1 is maintained up to 250 °C, it can be seen that the porous separator is suitable as the separator for lithium-ion secondary batteries in terms of dimensional stability and thermal shrinkage.

### 2. Measurement of tensile strength of porous separator according to the present invention

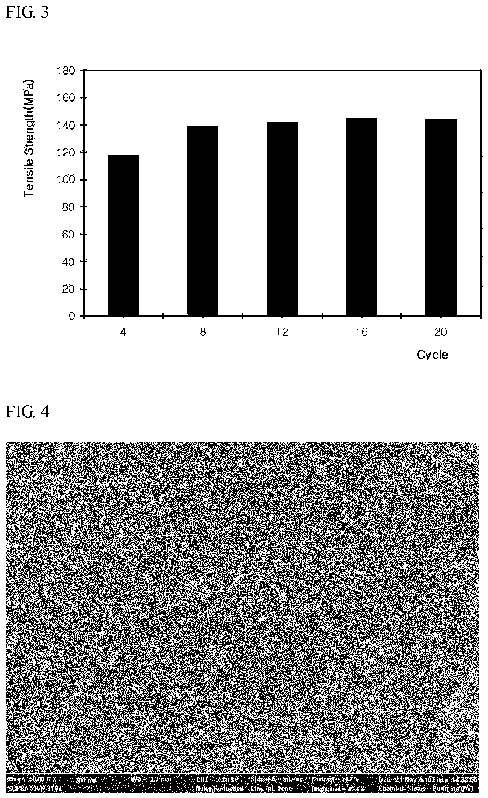

FIG. 3 is a graph illustrating the tensile strength of an olefin-based separator according to the number of cycles of a homogenizer. Here, the olefin-based separator has a tensile strength of 127.5 MPa or more when the tensile strength is measured after the olefin-based separator passes through a homogenizer in at least 8 cycles.

### 3. SEM analysis of porous separator according to the present invention

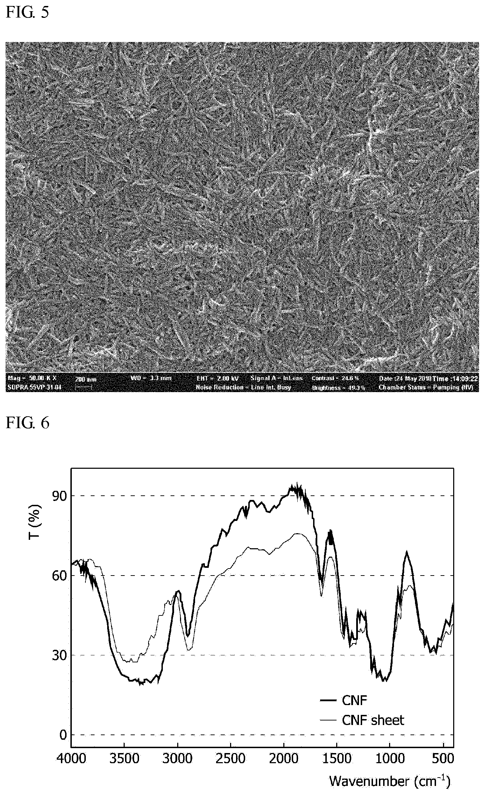

To visualize the pores in the porous separator according to the present invention, a cross section of the porous separator was analyzed with a scanning electron microscope before and after a pore-forming resin is removed from the porous separator of Example 1. The analytic results are shown in FIGS. 4 and 5.

As shown in FIG. 5, it can be seen that the pores between the cellulose nanofibrils are formed uniformly.

### 4. IRS analysis of porous separator according to the present invention

Referring to FIG. 6, the IRS analytic results of the sheet using cellulose nanofibrils according to the present invention and the cellulose indicate that the -OH peaks (3,300 to 3,600 cm⁻¹) drop with a decrease in -OH groups in the sheet using cellulose nanofibrils. In this case, the porous separator using cellulose nanofibrils serves to enhance stability as an ionic battery due to the presence of hydrogen bonds.

### 5. Porosity and measurement of porous separator according to the present invention

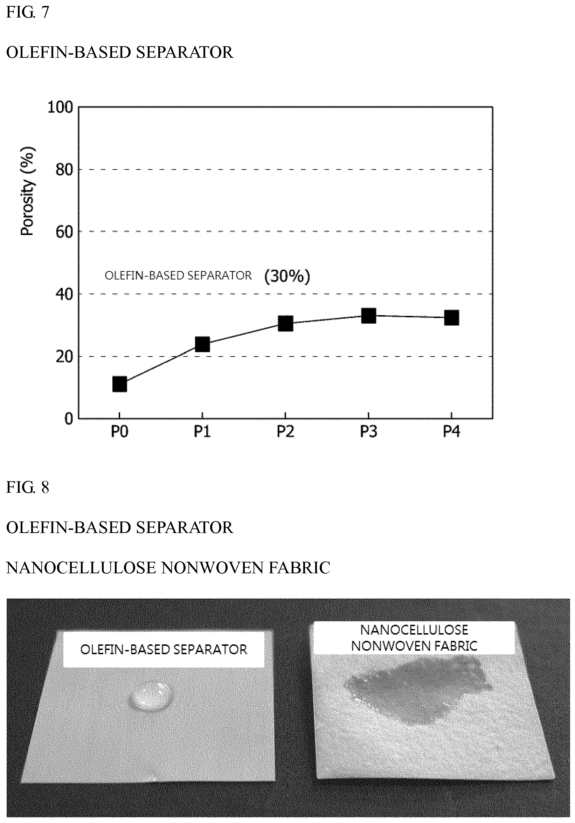

To determine a change in porosity according to the content of a pore-forming resin, each of separators of Comparative Examples 2 and 3 and Examples 1 to 3 is cut into pieces with a uniform size of 2×2 cm and impregnated in propylene carbonate for 2 hours. Here, each of the separators is weighed before/after the impregnation, and the porosity of the porous separator using cellulose nanofibrils is measured as the function of volume by multiplying the weight of the porous separator by the density of the impregnated solution. The results are shown in FIG. 7.

In this case, it can be seen that the porous separators of Example 2 (P3) and Example 3 (P4) have a porosity of 35% or more, which is higher than that of the separator (porosity: 30% or more) of Comparative Example 1, and the porosity increases with an increasing content of the pore-forming resin.

### 6. Measurement of impregnation property of porous separator according to the present invention

To determine an electrolyte impregnation property of the porous separator according to the present invention, the separators of Comparative Example 1 and Example 1 are prepared, and propylene carbonate was dropped on the separators of Comparative Example 1 and Example 1 using a microsyringe. The results obtained after two seconds are shown in FIG. 8.

The propylene carbonate is not impregnated into the separator of Comparative Example 1 at all. However, the propylene carbonate is impregnated into the separator of Example 1 immediately after being dropped on the separator.

Assuming that a battery impregnation property of the porous separator for lithium secondary batteries has a great effect on battery productivity and efficiency, it can be seen that the porous separator of Example 1 is suitable as the porous separator for lithium secondary batteries.

### 7. Measurement of uptake rate of porous separator according to the present invention

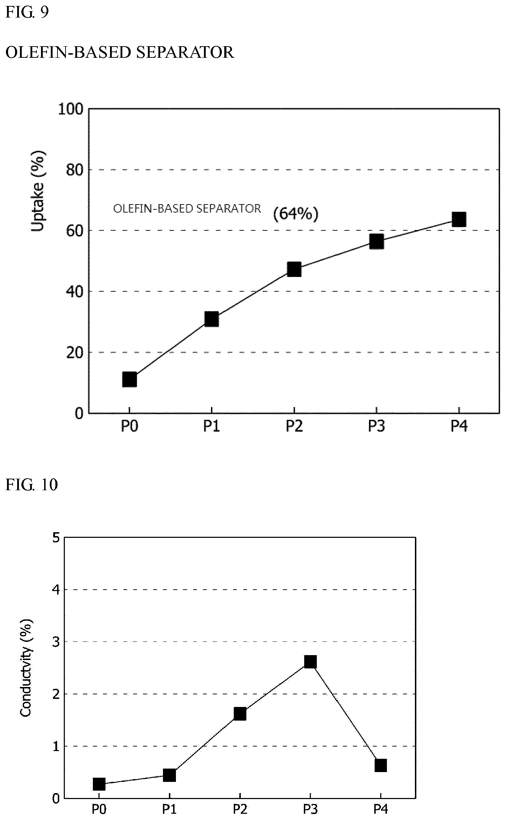

To determine the uptake rate of the porous separator according to the present invention, each of separators of Comparative Examples 2 (P0) and 3 (P1) and Examples 1 to 3 (P2 to P4) is cut into pieces with a uniform size of 2×2 cm and impregnated in propylene carbonate for 2 hours. Then, each of the separators is weighed before/after the impregnation, and the weight of the absorbed propylene carbonate is calculated in percentage. The results are shown in FIG. 9.

In this case, it can be seen that the separators of Comparative Examples 2 to 3 have a low uptake of 30% or less, but the porous separators of Examples 1 (P2), 2 (P3), and 3 (P4) have an excellent uptake of approximately 45%, approximately 60%, and approximately 65%, respectively.

### 8. Measurement of ionic conductivity of porous separator according to the present invention

To determine the ionic conductivity of the porous nanocellulose separator according to the present invention, each of the separators of Comparative Examples 2 and 3 (P0 and P1) and Examples 1 to 3 (P2 to P4) is prepared into a coin cell using stainless steel, and the ionic conductivity of each separator is then measured as impedance. The results are shown in FIG. 10.

In this case, it can be seen that the separators of Comparative Examples 1 (P0) and 2 (P1) have a very low ionic conductivity of 0.3×10⁻³ (mS/cm) or less, but the porous separator of Example 2 (P3) has a high ionic conductivity of 2.7×10⁻³ (mS/cm).

Also, the ionic conductivity of the porous separator of Example 3 (P4) is measured to decrease, but such a decrease in ionic conductivity is considered to appear as a thickness of the sheet including residual polyethylene glycol increases to approximately 90 µm. When the polyethylene glycol is completely removed, the ionic conductivity is expected to increase further.

### 9. Measurement of initial charge/discharge capacity and charge/discharge cycle of porous separator according to the present invention

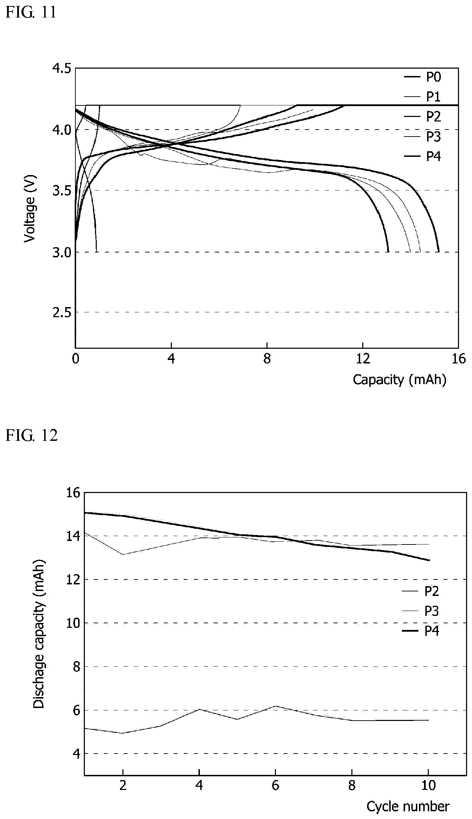

FIG. 11 is a graph illustrating the initial charge/discharge capacity measured for a cell for lithium-ion secondary batteries after an initial charge/discharge test. In this case, it can be seen that the porous separators of Examples 2 and 3 have an initial charge/discharge capacity of 15 mAh.

Also, FIG. 12 is a graph illustrating the charge/discharge cycle of a lithium-ion secondary battery. In this case, it can be seen that the porous separators are suitable as the separator for lithium-ion secondary batteries since there is no change in charge/discharge capacity after 10 charge/discharge cycles of the secondary battery.

Herein after, the present invention will be described in further detail with reference to Examples.

### Example 1

A cellulose powder was dispersed in a solvent and then passed through a homogenizer to prepare a frame with a certain shape. Polyethylene glycol was added during preparation of the frame to form pores.

When the content of the polyethylene glycol was 24% by weight, the porous separator using cellulose nanofibrils showed excellent characteristics, for example, a porosity of 30%, an uptake of 46%, and an ionic conductivity of 1.56 mS/cm. The initial charge/discharge characteristics were analyzed using the negative and positive poles as graphite and lithium cobalt oxide, respectively, by introducing an electrolyte into the porous separator using cellulose nano fibrils.

Also, the porous separators had an initial charge/discharge capacity of approximately 1 mAh and had a constant discharge capacity of approximately 5 mAh with respect to the charge/discharge characteristics.

### Example 2

A cellulose powder was dispersed in a solvent and then passed through a homogenizer to prepare a frame with a certain shape. Polyethylene glycol was added during preparation of the frame to form pores.

When the content of the polyethylene glycol was 40% by weight, the porous separator using cellulose nanofibrils showed excellent characteristics, for example, a porosity of 33%, an uptake of 57%, and an ionic conductivity of 2.66 mS/cm. The initial charge/discharge characteristics were analyzed using the negative and positive poles as graphite and lithium cobalt oxide, respectively, by detaching the porous sheet using cellulose nanofibrils from the separator and introducing an electrolyte into the separator.

The porous separators had an initial charge/discharge capacity of approximately 14 mAh, and had a constant discharge capacity of approximately 14 mAh with respect to the charge/discharge characteristics.

### Example 3

A cellulose powder was dispersed in a solvent and then passed through a homogenizer to prepare a frame with a certain shape. Polyethylene glycol was added during preparation of the frame to form pores.

When the content of the polyethylene glycol was 51% by weight, the porous separator using cellulose nanofibrils showed excellent characteristics, for example, a porosity of 32%, an uptake of 62%, and an ionic conductivity of 0.6 mS/cm. The initial charge/discharge characteristics were analyzed using the negative and positive poles as graphite and lithium cobalt oxide, respectively, by introducing an electrolyte into the porous separator using cellulose nanofibrils.

The porous separators had an initial charge/discharge capacity of approximately 16 mAh, and had a constant discharge capacity of approximately 13 to 15 mAh with respect to the charge/discharge characteristics.

### Comparative Example 2

A cellulose powder was dispersed in a solvent and then passed through a homogenizer to prepare a frame with a certain shape. Polyethylene glycol was added during preparation of the frame to form pores.

When the content of the polyethylene glycol was 0% by weight, the porous separator using cellulose nanofibrils showed poor characteristics, for example, a porosity of 11%, an uptake of 12%, and an ionic conductivity of 0.22 mS/cm. The initial charge/discharge characteristics were analyzed using the negative and positive poles as graphite and lithium cobalt oxide, respectively, by introducing an electrolyte into the porous separator using cellulose nanofibrils. In this case, the porous separators had no initial charge/discharge characteristics.

### Comparative Example 3

A cellulose powder was dispersed in a solvent, and then passed through a homogenizer to prepare a frame with a certain shape. Polyethylene glycol was added during preparation of the frame to form pores.

When the content of the polyethylene glycol was 13% by weight, the porous separator using cellulose nanofibrils showed poor characteristics, for example, a porosity of 23%, an uptake of 31%, and an ionic conductivity of 0.42 mS/cm. The initial charge/discharge characteristics were analyzed using the negative and positive poles as graphite and lithium cobalt oxide, respectively, by introducing an electrolyte into the porous separator using cellulose nanofibrils. In this case, the porous separators had no initial charge/discharge characteristics when the polyethylene glycol was present at a content of 13% by weight.

According to the present invention, the method of preparing a porous separator has advantages in that it is suitable for mass production due to its simplified preparation process and price competitiveness is high due to its manufacturing cost.

Also, a separator having excellent physical properties such as thermal stability, dimensional stability, and impregnation property can be prepared.

While the invention has been shown and described with reference to certain exemplary embodiments thereof, it will be understood by those skilled in the art that various changes in form and details may be made therein without departing from the scope of the appended claims.

## Claims

1. A method of manufacturing a porous separator using cellulose nanofibrils, comprising:
manufacturing a sheet using a solution including cellulose nanofibrils and a pore-forming resin; and
removing the pore-forming resin to form micropores in the sheet,
wherein the cellulose nanofibrils are at least one selected from the group consisting of cellulose nanofibrils separated from a woody material, algae cellulose nanofibrils, and bacterial cellulose nanofibrils obtained by incubating a strain,
wherein the pore-forming resin is at least one selected from the group consisting of polyethylene glycol, polypropylene alcohol, and polyvinyl propylene,
wherein manufacturing the sheet is performed by passing a solution including the cellulose nanofibrils and the pore-forming resin through a high-pressure homogenizer to make a cellulose nanofibrils suspension and decompressing the suspension to make the sheet,
wherein removing the pore-forming resin is performed by immersing the sheet in a solvent,
wherein the solvent dissolves the pore-forming resin and does not dissolve the cellulose nanofibrils,
wherein a mixing ratio of the cellulose nanofibrils and the pore-forming resin is 8:2 to 5:5 (w/w).

2. The method of claim 1, wherein the cellulose nanofibrils have a diameter of 10 to 1,000 nm.

3. The method of claim 1, wherein the cellulose nanofibrils have a diameter of 10 to 200 nm.

## Patentansprüche

1. Verfahren zur Herstellung eines porösen Separators unter Verwendung von Cellulose-Nanofibrillen, umfassend:
das Herstellen einer Lage unter Verwendung einer Lösung, einschließlich Cellulose-Nanofibrillen und eines porenbildenden Harzes;
und
das Entfernen des porenbildenden Harzes, um Mikroporen in der Lage zu bilden,
wobei die Cellulose-Nanofibrillen wenigstens eines sind, ausgewählt aus der Gruppe, bestehend aus Cellulose-Nanofibrillen, getrennt von einem Holzmaterial, Algen-Cellulose-Nanofibrillen und Bakterien-Cellulose-Nanofibrillen, die man durch Inkubation eines Stammes erhalten hat,
wobei das porenbildende Harz wenigstens eines ist, ausgewählt aus der Gruppe, bestehend aus Polyethylenglycol, Polypropylenalkohol und Polyvinylpropylen,
wobei das Herstellen der Lage durchgeführt wird durch das Leiten einer Lösung, einschließlich der Cellulose-Nanofibrillen und des porenbildenden Harzes durch einen Hochdruck-Homogenisator, um eine Cellulose-Nanofibrillen-Suspension herzustellen und das Dekomprimieren der Suspension, um die Lage herzustellen,
wobei das Entfernen des porenbildenden Harzes durchgeführt wird durch Eintauchen der Lage in ein Lösungsmittel,
wobei das Lösungsmittel das porenbildende Harz auflöst und nicht die Cellulose-Nanofibrillen auflöst,
wobei ein Mischungsverhältnis der Cellulose-Nanofibrillen und des porenbildenden Harzes 8:2 bis 5:5 Gew.% beträgt.

2. Verfahren nach Anspruch 1, wobei die Cellulose-Nanofibrillen einen Durchmesser von 10 bis 1.000 nm haben.

3. Verfahren nach Anspruch 1, wobei die Cellulose-Nanofibrillen einen Durchmesser von 10 bis 200 nm haben.

## Revendications

1. Procédé de fabrication d'un séparateur poreux utilisant des nanofibrilles de cellulose, comportant:
la fabrication d'une feuille utilisant une solution comportant des nanofibrilles de cellulose et une résine formant des pores;
et
l'élimination de la résine formant des pores pour former des micropores dans la feuille,
les nanofibrilles de cellulose étant au moins une choisie parmi le groupe constitué des nanofibrilles de cellulose séparées d'un matériau ligneux, des nanofibrilles de cellulose d'algue, et des nanofibrilles de cellulose bactériennes obtenues par incubation d'une souche,
la résine formant des pores étant au moins une choisie parmi le groupe constitué de polyéthylène glycol, d'alcool de polypropylène, et de poly-vinyle propylène,
la fabrication de la feuille étant réalisée en faisant passer une solution comportant les nanofibrilles de cellulose et la résine formant des pores à travers un homogénisateur haute-pression pour produire une suspension de nanofibrilles de cellulose, et en décompressant la suspension pour produire la feuille,
l'élimination de la résine formant des pores étant réalisée en immergeant la feuille dans un solvant,
le solvant dissolvant la résine formant des pores et ne dissolvant pas les nanofibrilles de cellulose,
un rapport de mélange des nanofibrilles de cellulose et de la résine formant des pores étant de 8:2 à 5:5 % en poids.

2. Procédé selon la revendication 1, les nanofibrilles de cellulose ayant un diamètre de 10 à 1.000 nm.

3. Procédé selon la revendication 1, les nanofibrilles de cellulose ayant un diamètre de 10 à 200 nm.
